(19) Europäisches Patentamt
European Patent Office
Office européen des brevets

(11) **EP 3 960 545 A1**

(12) **EUROPÄISCHE PATENTANMELDUNG**

(43) Veröffentlichungstag:
**02.03.2022   Patentblatt 2022/09**

(21) Anmeldenummer: **21191622.6**

(22) Anmeldetag: **17.08.2021**

(51) Internationale Patentklassifikation (IPC):
**B60R 16/02** *(2006.01)*

(52) Gemeinsame Patentklassifikation (CPC):
**B60R 16/0315;** B60R 16/0207

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.08.2020   DE 102020121614**

(71) Anmelder: **Lisa Dräxlmaier GmbH**
**84137 Vilsbiburg (DE)**

(72) Erfinder: **Wortberg, Michael**
**84405 Dorfen (DE)**

(54) **ELEKTRISCHE VERBINDUNGSANORDNUNG ZUM ANSCHLIESSEN VON FREI KONFIGURIERBAREN ELEKTRISCHEN KOMPONENTEN IN EINEM FAHRZEUG**

(57)   Die Erfindung betrifft eine elektrische Verbindungsanordnung (800) zum Anschließen von frei konfigurierbaren elektrischen Komponenten in einem Fahrzeug, wobei die elektrische Verbindungsanordnung eine Mehrzahl von elektrischen Steckverbindern (201, 202, 203, 204, 205, 206) umfasst, die über eine Mehrzahl von elektrischen Anschlussleitungen (221, 222, 223, 224, 225, 226, 227, 228) eines elektrischen Leitungssatzes gemäß einem ersten Adjazenzkriterium (300, $A_{ST}$) miteinander verbunden sind, wobei der Mehrzahl von Steckverbindern jeweils ein Konfigurationscode (401a, 401b) gemäß einem zweiten Adjazenzkriterium (400, $A_{SA}$) zugeordnet ist, wobei die Konfigurationscodes der Steckverbinder eine spezifische Konfiguration der frei konfigurierbaren elektrischen Komponenten des Fahrzeugs angeben, wobei die Mehrzahl von elektrischen Steckverbindern basierend auf einer Kombination des ersten Adjazenzkriteriums und des zweiten Adjazenzkriteriums in eine Mehrzahl von Fertigungsmodulen (801, 802) aufgeteilt ist.

FIG. 8

EP 3 960 545 A1

## Beschreibung

### Technisches Gebiet

Die Erfindung betrifft eine elektrische Verbindungsanordnung zum Anschließen von frei konfigurierbaren elektrischen Komponenten in einem Fahrzeug sowie ein Verfahren zum Erzeugen einer modularen elektrischen Verbindungsanordnung. Insbesondere betrifft die Erfindung einen Algorithmus für die Modularisierung in der Leitungssatzfertigung.

### Stand der Technik

Die erhebliche Teilevielfalt des physischen Bordnetzes von Fahrzeugen, z.B. Kraftfahrzeugen, ist einer der Hinderungsgründe für eine effiziente Automatisierung in der Leitungssatzfertigung. Im konventionellen Bordnetz existiert eine Vielzahl von frei konfigurierbaren elektrischen Komponenten, wie zum Beispiel Anzeigeinstrumente, Abstandsregelung, ABS/ESP, Motorelektronik, Dachelektronik, Schiebedach, Heizung, Klimaanlange, Kartenleser, Navigation, Verstärker, TV-Tuner, etc., welche durch den Kunden beim Kauf des Fahrzeug auf individuellen Kundenwunsch konfiguriert werden können. Derzeit werden die Fertigungskosten bestimmt durch kundenspezifische Kabelsätze von Basisfahrzeugen, welche durch Hinzufügen von Sonderausstattungen (SA) an die Kundenwünsche angepasst werden können. Dem Kunden wird dabei eine Auswahlliste mit Extras zur Verfügung gestellt, aus der er sich sein eigenes Fahrzeug flexibel konfigurieren kann. Zum Beispiel kann er auswählen, ob er eine zusätzliche Sitzheizung wünscht oder ein Navigationsgerät, einen HiFi-Lautsprecher, etc.

Während früher ein Basiskabelbaum gefertigt wurde, bei dem nicht benötigte Leitungen zurückgebunden wurden, ergibt sich heute je nach gewünschter, d.h. konfigurierter Sonderausstattung ein kundenspezifischer Kabelbaum bzw. Leitungssatz, bei dem entsprechende Leitungen für die gewünschten Sonderausstattungen vorhanden sind. Damit einhergehend entsteht eine große Vielfalt an kundenspezifischen Kabelbäumen bzw. Leitungssätzen. Diese Komplexität stellt für die automatisierte Fertigung einen Nachteil dar, da die Leitungssätze nicht mehr auf einfache Weise modularisiert werden können.

Heutige Haupt-Leitungssätze weisen eine tiefe Vermaschung auf. Diese tiefe Vermaschung sorgt dafür, dass der große Haupt-Leitungssatz nicht in abgeschlossene, für die automatisierte Fertigung optimierte Module unterteilt werden kann. Zwar gibt es auch heute eine Modulfertigung, allerdings sind diese Module nicht abgeschlossen und deshalb muss im Zusammenbau ein manuelles Nachpinnen erfolgen, was meist von Hand auszuführen ist.

### Beschreibung der Erfindung

Es ist eine Aufgabe der Erfindung, ein vorteilhaftes Konzept zur Modularisierung in der Leitungssatzfertigung zu schaffen, bei dem bei einer Vielzahl von kundenspezifisch konfigurierbaren Sonderausstattungen sich der Aufwand für das Nachpinnen des Leitungssatzes reduziert.

Die Erfindung basiert auf der Idee, die Nachbarschaftsbeziehungen, im Folgenden auch Adjazenzen bezeichnet, der Steckverbinder untereinander sowie von den Steckverbindern zu den Sonderausstattungen, d.h. kundenspezifischen Konfigurationen, in geeigneter Weise auszunutzen, um eine effiziente Modularisierung vorzunehmen.

Das Konzept beruht insbesondere darauf, die Adjazenzmatrix der Steckerverbindungen mit der Adjazenzmatrix der Sonderausstattungs- (SA) Zugehörigkeit zu multiplizieren. Aus der resultierenden Adjazenz wird für jeden Stecker der Stecker mit der höchsten Affinität bestimmt. Diese Stecker-Paarungen kann man sich als "Dominosteine" vorstellen. Anschließend werden die "Dominosteine" algorithmisch angereiht. Dabei ergeben sich Cluster. Die Cluster haben untereinander minimal wenige Querverbindungen, die die Unabhängigkeit verletzen. Gibt es keine Querverbindungen, so sind abgeschlossene Cluster bzw. Module gefunden.

Die Bestimmung der Fertigungsmodule mit einem solchen Algorithmus führt zu einer effizienteren Modularisierung, die dann auch für eine automatisierte Fertigung genutzt werden kann.

Während in der bisherigen Fertigung die Module vor Produktionsstart lediglich einmal im Vorhinein bestimmt werden, können sie mittels des hier neu vorgestellten Algorithmus auch dynamisch für jedes Fahrzeug neu und optimal bestimmt werden und in einer durchgängig digitalisierten Fertigung an die Automaten weitergegeben werden.

Im Folgenden werden elektrische Verbindungsanordnungen mit Steckverbindern und Leitungssätzen beschrieben, die unter Verwendung von Adjazenzkriterien und Adjazenzmatrizen modularisiert werden können. Der Begriff "Adjazenz" bedeutet hierbei "Nachbarschaft" oder auch "Nachbarschaftsbeziehung". Mithilfe einer Adjazenzmatrix lassen sich Graphen mit ihren Knoten und Kanten in einer Matrix abbilden. Die Matrix speichert die Beziehungen der Knoten untereinander. Jeder Knoten repräsentiert in der Matrix eine Zeile und eine Spalte. Die Matrix ist bei einer Anzahl von N Knoten N x N groß. Die Einträge in den Spalten und Zeilen zeigen, ob Knoten miteinander verbunden sind. Die Zahl "0" steht für keine Verbindung (keine Kante), die Zahl "1" für eine existierende Verbindung. Adjazenzmatrizen lassen sich für verschiedene Arten von Graphen wie gerichtete Graphen, ungerichtete Graphen oder gewichtete Graphen verwenden. Bei gewichteten Graphen stehen nicht die Werte "0" oder "1", sondern Zahlen als Gewichtungen in der Matrix. Die Adjazenzmatrix verbindet die Graphentheorie mit der linearen Algebra.

Bei den in dieser Offenbarung beschriebenen Adjazenzkriterien bzw. Adjazenzmatrizen werden die Knoten durch elektrische Steckverbinder bzw. Stecker gebildet und die Kanten durch elektrische Leitungen des Leitungssatzes, welche die Steckverbinder miteinander verbinden oder die elektrischen Komponenten der kundenspezifischen Sonderausstattung anschließen.

Gemäß einem ersten Aspekt der Erfindung wird die Aufgabe gelöst durch eine elektrische Verbindungsanordnung zum Anschließen von frei konfigurierbaren elektrischen Komponenten in einem Fahrzeug, wobei die elektrische Verbindungsanordnung eine Mehrzahl von elektrischen Steckverbindern umfasst, die über eine Mehrzahl von elektrischen Anschlussleitungen eines elektrischen Leitungssatzes gemäß einem ersten Adjazenzkriterium miteinander verbunden sind, wobei der Mehrzahl von Steckverbindern jeweils ein Konfigurationscode gemäß einem zweiten Adjazenzkriterium zugeordnet ist, wobei die Konfigurationscodes der Steckverbinder eine spezifische Konfiguration der frei konfigurierbaren elektrischen Komponenten des Fahrzeugs angeben, wobei die Mehrzahl von elektrischen Steckverbindern basierend auf einer Kombination des ersten Adjazenzkriteriums und des zweiten Adjazenzkriteriums in eine Mehrzahl von Fertigungsmodulen aufgeteilt ist.

Eine elektrische Verbindungsanordnung, die auf solche Weise modularisiert ist, d.h. basierend auf einem ersten Adjazenzkriterium, welches die Nachbarschaftsbeziehungen der Steckverbinder untereinander berücksichtigt, und einem zweiten Adjazenzkriterium, welches die Nachbarschaftsbeziehungen der Stecker zu den Sonderausstattungen, d.h. kundenspezifischen Konfigurationen berücksichtigt, bringt eine besonders effiziente Modularisierung. Die elektrische Verbindungsanordnung und der zugehörige Leitungssatz lassen sich damit auch auf effiziente Weise in automatisierter Fertigung herstellen.

Gemäß einer beispielhaften Ausführungsform der elektrischen Verbindungsanordnung umfassen die Fertigungsmodule jeweils Paare von Steckverbindern, deren kombinierte Adjazenz bezüglich des ersten Adjazenzkriteriums und des zweiten Adjazenzkriteriums innerhalb gleicher Bereiche liegt.

Damit wird der technische Vorteil erreicht, dass aus der resultierenden Adjazenz, d.h. der kombinierten Adjazenz bezüglich des ersten Adjazenzkriteriums und des zweiten Adjazenzkriteriums für jeden Stecker der Stecker mit der höchsten Affinität bestimmt werden kann. Diese Stecker-Paarungen können dann in Custer bzw. Bereiche mit ähnlicher Adjazenz angeordnet werden. Diese Cluster haben untereinander minimal wenige Querverbindungen, die die Unabhängigkeit verletzen. Gibt es keine Querverbindungen, so sind abgeschlossene Cluster bzw. Module gefunden. Damit kann der Leitungssatz auf besonders effiziente Weise in automatischer Fertigung hergestellt werden. Bei wenigen Querverbindungen ist nur ein geringes Nachpinnen erforderlich, bei keinen Querverbindungen ist kein Nachpinnen mehr erforderlich.

Gemäß einer beispielhaften Ausführungsform der elektrischen Verbindungsanordnung umfasst das erste Adjazenzkriterium eine Stecker-Adjazenzmatrix, die eine Anzahl von Verbindungsbeziehungen der Steckverbinder untereinander angibt.

Damit wird der technische Vorteil erreicht, dass die Nachbarschaftsbeziehungen der Stecker untereinander in der Modularisierung berücksichtigt werden.

Gemäß einer beispielhaften Ausführungsform der elektrischen Verbindungsanordnung basiert das zweite Adjazenzkriterium auf einer Konfigurationmatrix, die für jeden Steckverbinder angibt, insbesondere mittels eines Bits, für welche Konfigurationen Anschlüsse für Verbindungsbeziehungen benötigt werden.

Damit wird der technische Vorteil erreicht, dass die verschiedenen Konfigurationen bzw. kundenspezifischen Sonderausstattungen in der Modularisierung berücksichtigt werden.

Gemäß einer beispielhaften Ausführungsform der elektrischen Verbindungsanordnung umfasst die Konfigurationmatrix eine Gewichtung der Konfigurationscodes entsprechend einer Auftretenshäufigkeit der jeweiligen Konfigurationscodes.

Damit wird der technische Vorteil erreicht, dass Konfigurationen bzw. kundenspezifische Sonderausstattungen, die häufiger vorkommen, eine stärkere Gewichtung in der Konfigurationsmatrix erhalten und damit in der Modularisierung ein höheres Gewicht haben.

Gemäß einer beispielhaften Ausführungsform der elektrischen Verbindungsanordnung basiert das zweite Adjazenzkriterium auf einer Konfigurations-Adjazenzmatrix, die sich für Kombinationen von Steckverbinder-Paaren aus dem Skalarprodukt zweier entsprechender Spalten der Konfigurationmatrix bestimmt.

Damit wird der technische Vorteil erreicht, dass die Nachbarschaftsbeziehungen der jeweiligen Konfigurationen bzw. kundenspezifischen Sonderausstattungen in der Modularisierung berücksichtigt werden.

Gemäß einer beispielhaften Ausführungsform der elektrischen Verbindungsanordnung basieren die Kombination des ersten Adjazenzkriteriums und des zweiten Adjazenzkriteriums auf einer kombinierten Adjazenzmatrix, welche aus einer Multiplikation der Stecker-Adjazenzmatrix mit der Konfigurations-Adjazenzmatrix hervorgeht.

Damit wird der technische Vorteil erreicht, dass sowohl die Nachbarschaftsbeziehungen der Stecker untereinander als auch der jeweiligen Konfigurationen in der Modularisierung berücksichtigt werden.

Gemäß einer beispielhaften Ausführungsform der elektrischen Verbindungsanordnung sind die Paare von Steckverbindern, aus denen sich die Fertigungsmodule zusammensetzen, diejenigen, deren kombinierte Adjazenz in der kombinierten Adjazenzmatrix maximal ist.

Damit wird der technische Vorteil erreicht, dass die Fertigungsmodule solche Paare von Steckverbindern umfassen, die jeweils die höchste Nachbarschaftsbeziehung untereinander aufweisen.

Gemäß einer beispielhaften Ausführungsform der elektrischen Verbindungsanordnung erfolgt die Aufteilung der Mehrzahl von elektrischen Steckverbindern in die Mehrzahl von Fertigungsmodulen basierend auf einer Sortierung der Paare von Steckverbindern, deren kombinierte Adjazenz in der kombinierten Adjazenzmatrix maximal ist.

Damit wird der technische Vorteil erreicht, dass die Paare von Steckverbindern mit höchster Nachbarschaftsbeziehung effizient in den Fertigungsmodulen zusammen angeordnet werden können.

Gemäß einer beispielhaften Ausführungsform der elektrischen Verbindungsanordnung weisen die Mehrzahl von Fertigungsmodulen keine oder zumindest weniger elektrische Anschlussleitungen untereinander auf als die elektrischen Steckverbinder der jeweiligen Fertigungsmodule untereinander.

Damit wird der technische Vorteil erreicht, dass abgeschlossene Module oder zumindest nur durch wenige Verbindungsleitungen verbundene Module entstehen, die sich auf einfache Weise automatisch fertigen lassen.

Gemäß einer beispielhaften Ausführungsform der elektrischen Verbindungsanordnung umfasst die elektrische Verbindungsanordnung ein Data Power Interface (DPI), das ausgebildet ist, die zumindest wenigeren elektrischen Anschlussleitungen der Fertigungsmodule untereinander zu entflechten, so dass die Fertigungsmodule in sich abgeschlossen sind und keine elektrischen Anschlussleitungen zu anderen Fertigungsmodulen aufweisen.

Ein Data Power Interface ist ein Hardware-Baustein, der die Versorgungsspannung bereitstellt und eine Schnittstelle zur Entflechtung der Datenleitungen bzw. Datenverbindungen zwischen den Steckverbindern bereitstellt.

Damit wird der technische Vorteil erreicht, dass das DPI die noch vorhandenen Verbindungsleitungen zwischen den einzelnen Modulen auf einfache Art entflechten kann, so dass eine effiziente automatische Fertigung aufgebaut werden kann.

Gemäß einer beispielhaften Ausführungsform der elektrischen Verbindungsanordnung bilden die Mehrzahl von elektrischen Steckverbindern eine CAN-Topologie, wobei das DPI ausgebildet ist, einen Sternpunkt der CAN-Topologie auszuprägen.

Damit wird der technische Vorteil erreicht, dass das DPI sowohl zur Entflechtung der der Versorgungsleitungen als auch der Datenleitungen dient.

Gemäß einem zweiten Aspekt der Erfindung wird die Aufgabe gelöst durch ein Verfahren zum Erzeugen einer modularen elektrischen Verbindungsanordnung zum Anschließen von frei konfigurierbaren elektrischen Komponenten in einem Fahrzeug, wobei das Verfahren folgende Schritte umfasst: Verbinden einer Mehrzahl von elektrischen Steckverbindern über eine Mehrzahl von elektrischen Anschlussleitungen eines elektrischen Leitungssatzes zu einer elektrischen Verbindungsanordnung gemäß einem ersten Adjazenzkriterium; Zuordnen eines Konfigurationscodes gemäß einem zweiten Adjazenzkriterium zu der Mehrzahl von Steckverbindern, wobei die Konfigurationscodes der Steckverbinder eine spezifische Konfiguration der frei konfigurierbaren elektrischen Komponenten des Fahrzeugs angeben, Aufteilen der Mehrzahl von elektrischen Steckverbindern basierend auf einer Kombination des ersten Adjazenzkriteriums und des zweiten Adjazenzkriteriums in eine Mehrzahl von Fertigungsmodulen.

Ein solches Verfahren, das eine derartige Modularisierung einer elektrischen Verbindungsanordnung ausführt, d.h. basierend auf einem ersten Adjazenzkriterium, welches die Nachbarschaftsbeziehungen der Steckverbinder untereinander berücksichtigt, und einem zweiten Adjazenzkriterium, welches die Nachbarschaftsbeziehungen der Stecker zu den Sonderausstattungen, d.h. kundenspezifischen Konfigurationen berücksichtigt, bringt eine besonders effiziente Modularisierung. Eine mit einem solchen Verfahren hergestellte elektrische Verbindungsanordnung sowie der zugehörige elektrische Leitungssatz lassen sich besonders effizient in automatisierter Fertigung herstellen.

Gemäß einer beispielhaften Ausführungsform des Verfahrens umfasst das Aufteilen folgendes: Bestimmen von jeweiligen Paaren von Steckverbindern, deren kombinierte Adjazenz bezüglich des ersten Adjazenzkriteriums und des zweiten Adjazenzkriteriums innerhalb gleicher Bereiche liegt.

Damit wird der technische Vorteil erreicht, dass aus der resultierenden Adjazenz, d.h. der kombinierten Adjazenz bezüglich des ersten Adjazenzkriteriums und des zweiten Adjazenzkriteriums für jeden Stecker der Stecker mit der höchsten Affinität bestimmt werden kann. Diese Stecker-Paarungen können dann in Custer bzw. Bereiche mit ähnlicher Adjazenz angeordnet werden. Diese Cluster haben untereinander minimal wenige Querverbindungen, die die Unabhängigkeit verletzen. Gibt es keine Querverbindungen, so sind abgeschlossene Cluster bzw. Module gefunden. Damit kann der Leitungssatz auf besonders effiziente Weise in automatischer Fertigung hergestellt werden. Bei wenigen Querverbindungen ist nur ein geringes Nachpinnen erforderlich, bei keinen Querverbindungen ist kein Nachpinnen mehr erforderlich.

Gemäß einer beispielhaften Ausführungsform des Verfahrens umfasst das Aufteilen folgendes: Bestimmen der jeweiligen Paare von Steckverbindern basierend auf einer Multiplikation einer Stecker-Adjazenzmatrix mit einer Konfigurations-Adjazenzmatrix, wobei die Stecker-Adjazenzmatrix eine Anzahl von Verbindungsbeziehungen der Steckverbinder untereinander angibt, und wobei die Konfigurations-Adjazenzmatrix sich für Kombinationen von Steckverbinder-Paaren aus dem Skalarprodukt zweier entsprechender Spalten einer Konfigurationmatrix bestimmt, welche für jeden Steckverbinder angibt für welche Konfigurationen Anschlüsse für Verbindungsbeziehungen benötigt werden.

Damit wird der technische Vorteil erreicht, dass sowohl die Nachbarschaftsbeziehungen der Stecker untereinander als auch der jeweiligen Konfigurationen in der Modularisierung berücksichtigt werden.

Gemäß einem dritten Aspekt der Erfindung wird die Aufgabe gelöst durch einen Algorithmus zum Erzeugen einer modularen elektrischen Verbindungsanordnung zum Anschließen von frei konfigurierbaren elektrischen Komponenten in einem Fahrzeug, wobei der Algorithmus folgende Schritte umfasst: Verbinden einer Mehrzahl von elektrischen Steckverbindern über eine Mehrzahl von elektrischen Anschlussleitungen eines elektrischen Leitungssatzes zu einer elektrischen Verbindungsanordnung gemäß einem ersten Adjazenzkriterium; Zuordnen eines Konfigurationscodes gemäß einem zweiten Adjazenzkriterium zu der Mehrzahl von Steckverbindern, wobei die Konfigurationscodes der Steckverbinder eine spezifische Konfiguration der frei konfigurierbaren elektrischen Komponenten des Fahrzeugs angeben, Aufteilen der Mehrzahl von elektrischen Steckverbindern basierend auf einer Kombination des ersten Adjazenzkriteriums und des zweiten Adjazenzkriteriums in eine Mehrzahl von Fertigungsmodulen.

Gemäß einem vierten Aspekt der Erfindung wird die Aufgabe gelöst durch ein Computerprogramm mit einem Programmcode zur Durchführung des Verfahrens gemäß dem zweiten Aspekt oder des Algorithmus gemäß dem dritten Aspekt, wenn der Programmcode auf einem Computer oder Prozessor läuft.

Kurze Figurenbeschreibung

Im Folgenden wird die Erfindung anhand von Ausführungsbeispielen und den Figuren näher beschrieben. In den Figuren zeigen:

Fig. 1    eine schematische Darstellung einer Anordnung 100 aus frei konfigurierbaren elektrischen Komponenten in einem Fahrzeug, welche sich über einen Leitungssatz anschließen lassen;

Fig. 2    eine schematische Darstellung einer beispielhaften elektrischen Verbindungsanordnung 200, die modularisiert werden soll gemäß einem Ausführungsbeispiel;

Fig. 3    eine schematische Darstellung einer beispielhaften Stecker-Adjazenzmatrix $A_{ST}$ 301 entsprechend einem ersten Adjazenzkriterium 300 gemäß einem Ausführungsbeispiel;

Fig. 4    eine schematische Darstellung einer beispielhaften Konfigurationsmatrix bzw. Sonderausstattungsmatrix SA 401 sowie der zugehörigen Konfigurations-Adjazenzmatrix $A_{SA}$ 402 entsprechend einem zweiten Adjazenzkriterium 400 gemäß einem Ausführungsbeispiel;

Fig. 5    eine schematische Darstellung 500 einer beispielhaften kombinierten bzw. resultierenden Adjazenzmatrix $A_{RE}$ 503, welche aus einer Kombination der Stecker-Adjazenzmatrix $A_{ST}$ 301 mit der Konfigurations-Adjazenzmatrix $A_{SA}$ 402 gebildet wird, gemäß einem Ausführungsbeispiel;

Fig. 6    eine schematische Darstellung der kombinierten Adjazenzmatrix $A_{RE}$ 503 mit Kenntlichmachung der maximalen kombinierten Adjazenzwerte gemäß einem Ausführungsbeispiel;

Fig. 7a    eine schematische Darstellung der Paare von Steckverbindern 710, deren kombinierte Adjazenz in der kombinierten Adjazenzmatrix $A_{RE}$ 503 maximal ist, gemäß einem Ausführungsbeispiel;

Fig. 7b    eine schematische Darstellung Aufteilung der Paare von Steckverbindern 710 mit maximaler kombinierter Adjazenz in verschiedene Cluster gemäß einem Ausführungsbeispiel;

Fig. 7c    eine schematische Darstellung der Stecker-Adjazenzmatrix $A_{ST}$ 301 mit Kenntlichmachung der beiden Cluster 731, 732 sowie der verbleibenden Verbindungen 733 zwischen den beiden Clustern gemäß einem Ausführungsbeispiel;

Fig. 8    eine schematische Darstellung einer modularisierten elektrischen Verbindungsanordnung 800 gemäß einem Ausführungsbeispiel;

Fig. 9    eine schematische Darstellung einer modularisierten elektrischen Verbindungsanordnung 900 mit einer Aufteilung eines Steckers gemäß einem Ausführungsbeispiel;

Fig. 10    eine schematische Darstellung einer modularisierten elektrischen Verbindungsanordnung 1000 mit einer Aufteilung eines Steckers gemäß einem Ausführungsbeispiel;

Fig. 11    eine schematische Darstellung einer modularisierten elektrischen Verbindungsanordnung 1100 gemäß einem Ausführungsbeispiel;

Fig. 12    eine schematische Darstellung einer modularisierten elektrischen Verbindungsanordnung 1200 gemäß einem Ausführungsbeispiel; und

Fig. 13    eine schematische Darstellung eines Verfahrens 1300 zum Erzeugen einer modularen elektrischen Verbindungsanordnung gemäß einem Ausführungsbeispiel.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

**Detaillierte Beschreibung**

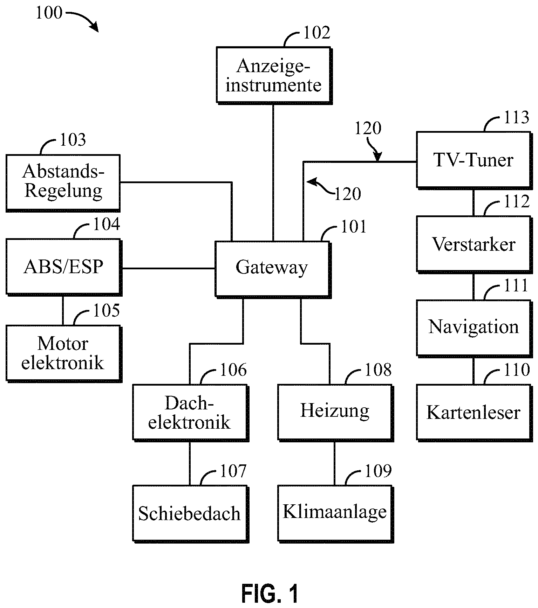

Fig. 1 zeigt eine schematische Darstellung einer Anordnung 100 aus frei konfigurierbaren elektrischen Komponenten in einem Fahrzeug, welche sich über einen Leitungssatz anschließen lassen.

Die Anordnung stellt einen Teil eines Bordnetzes eines Fahrzeugs, z.B. eines Kraftfahrzeugs dar. Eine Vielzahl von frei konfigurierbaren elektrischen Komponenten ist über einen Leitungssatz 120 über ein Gateway 101 untereinander verbunden. In diesem Beispiel sind die folgenden elektrischen Komponenten dargestellt: Anzeigeinstrumente 102, Abstandsregelung 103, ABS/ESP 104, Motorelektronik 105, Dachelektronik 106, Schiebedach 107, Heizung 108, Klimaanlage 109, Kartenleser 110, Navigation 111, Verstärker 112, TV-Tuner 113. Das Bordnetz kann noch weitere hier nicht dargestellte Komponenten umfassen, die über den Leitungssatz 120 an das Gateway 101 angeschlossen sind.

Die elektrischen Komponenten sind durch den Kunden frei konfigurierbar, d.h. sie können beim Bestellvorgang softwareunterstützt ausgewählt oder weggelassen werden. Je nach kundenspezifischer Ausstattung, hier als Sonderausstattung (SA) bezeichnet, wird ein entsprechender Leitungssatz 120 spezifiziert, der die dem individuellen Kundenwunsch entsprechende Auswahl der elektrischen Komponenten 102, 103, 104, 105, 106, 107, 108, 109, 110, 111, 112, 113 entspricht und für eine Verkabelung der ausgewählten Komponenten sorgt. In der industriellen Fertigung ist es vorteilhaft, wenn der Leitungssatz 120 aus sich abgeschlossenen Modulen besteht, um den Aufwand für das (manuelle) Nachpinnen zu reduzieren. Die in dieser Offenbarung vorgestellten Verfahren, Anordnungen und Algorithmen zeigen auf, wie solch eine Modularisierung vorteilhaft erreicht werden kann.

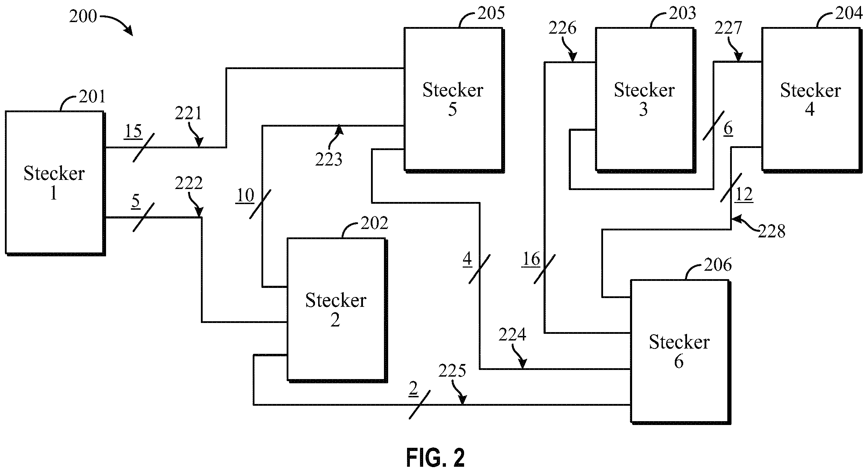

Fig. 2 zeigt eine schematische Darstellung einer beispielhaften elektrischen Verbindungsanordnung 200, die modularisiert werden soll gemäß einem Ausführungsbeispiel.

Die elektrische Verbindungsanordnung 200 umfasst eine beispielhafte Anzahl von sechs Steckverbindern bzw. Steckern 201, 202, 203, 204, 205, 206, die über eine Mehrzahl von elektrischen Anschlussleitungen 221, 222, 223, 224, 225, 226, 227, 228 untereinander verbunden sind.

Dabei bezeichnet 221 die elektrische Anschlussleitung von Stecker 1 zu Stecker 5, 222 bezeichnet die elektrische Anschlussleitung von Stecker 1 zu Stecker 2, 223 bezeichnet die elektrische Anschlussleitung von Stecker 2 zu Stecker 5, 224 bezeichnet die elektrische Anschlussleitung von Stecker 6 zu Stecker 5, 225 bezeichnet die elektrische Anschlussleitung von Stecker 2 zu Stecker 6, 226 bezeichnet die elektrische Anschlussleitung von Stecker 3 zu Stecker 6, 227 bezeichnet die elektrische Anschlussleitung von Stecker 3 zu Stecker 4 und 228 bezeichnet die elektrische Anschlussleitung von Stecker 4 zu Stecker 6.

In diesem Beispiel umfasst die Anschlussleitung 221 eine beispielhafte Anzahl von 15 Einzelleitungen, die Anschlussleitung 222 umfasst eine beispielhafte Anzahl von 5 Einzelleitungen, die Anschlussleitung 223 umfasst eine beispielhafte Anzahl von 10 Einzelleitungen, die Anschlussleitung 224 umfasst eine beispielhafte Anzahl von 4 Einzelleitungen, die Anschlussleitung 225 umfasst eine beispielhafte Anzahl von 2 Einzelleitungen, die Anschlussleitung 226 umfasst eine beispielhafte Anzahl von 16 Einzelleitungen, die Anschlussleitung 227 umfasst eine beispielhafte Anzahl von 6 Einzelleitungen und die Anschlussleitung 228 umfasst eine beispielhafte Anzahl von 12 Einzelleitungen.

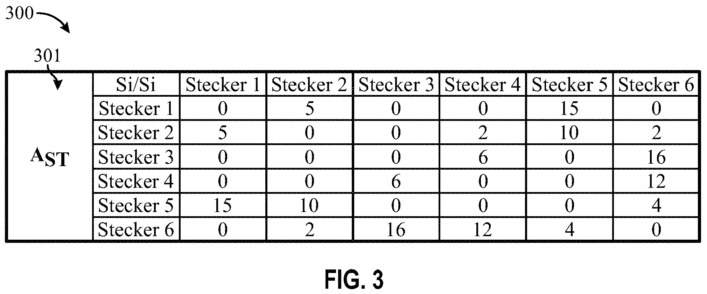

Die Stecker - Adjazenzmatrix $A_{ST}$ zu dieser Steckeranordnung 200, welche angibt, welcher Stecker mit welchem anderen Stecker wieviele Verbindungsbeziehungen hat, ist in Figur 3 dargestellt.

Fig. 3 zeigt eine schematische Darstellung einer beispielhaften Stecker-Adjazenzmatrix $A_{ST}$ 301 entsprechend einem ersten Adjazenzkriterium 300 gemäß einem Ausführungsbeispiel.

Die Stecker-Adjazenzmatrix $A_{ST}$ ist eine symmetrische Matrix, deren Spalten- und Zeilenanzahl der Anzahl der Stecker der elektrischen Verbindungsanordnung 200 aus Figur 2 entspricht. Die Elemente der Stecker-Adjazenzmatrix $A_{ST}$ geben an, wieviele Leitungen (d.h. Einzelleitungen) von einem Stecker Si zu einem anderen Stecker Sj verlaufen. Gibt es keine Verbindung, so ist der Wert Null.

Aus Figur 2 ist ersichtlich, dass 5 Leitungen von Stecker 1 zu Stecker 2 führen, und 15 Leitungen von Stecker 1 zu Stecker 5. Damit ergibt sich die erste Spalte der Stecker-Adjazenzmatrix $A_{ST}$ zu: $(0, 5, 0, 0, 15, 0)^T$. Ferner ist ersichtlich, dass 10 Leitungen von Stecker 2 zu Stecker 5 führen, 5 Leitungen von Stecker 2 zu Stecker 1 und 2 Leitungen von Stecker 2 zu Stecker 6. Damit ergibt sich die zweite Spalte der Stecker-Adjazenzmatrix $A_{ST}$ zu: $(5, 0, 0, 0, 10, 2)^T$. Ferner ist ersichtlich, dass 16 Leitungen von Stecker 3 zu Stecker 6 führen und 6 Leitungen von Stecker 3 zu Stecker 4. Damit ergibt sich die dritte Spalte der Stecker-Adjazenzmatrix $A_{ST}$ zu: $(0, 0, 0, 6, 0, 16)^T$. Ferner ist ersichtlich, dass 6 Leitungen von Stecker 4 zu Stecker 3 führen und 12 Leitungen von Stecker 4 zu Stecker 6. Damit ergibt sich die vierte Spalte der Stecker-Adjazenzmatrix $A_{ST}$ zu: $(0, 0, 6, 0, 0, 12)^T$. Ferner ist ersichtlich, dass 15 Leitungen von Stecker 5 zu Stecker 1 führen, 10 Leitungen von Stecker 5 zu Stecker 2 und 4 Leitungen von Stecker 5 zu Stecker 6. Damit ergibt sich die fünfte Spalte der Stecker-Adjazenzmatrix $A_{ST}$ zu: $(15, 10, 0, 0, 0, 4)^T$. Ferner ist ersichtlich, dass 12 Leitungen von Stecker 6 zu Stecker 4 führen, 16 Leitungen von Stecker 6 zu Stecker 3, 4 Leitungen von Stecker 6 zu Stecker 5 und 2 Leitungen von Stecker 6 zu Stecker 2. Damit ergibt sich die sechste Spalte der Stecker-Adjazenzmatrix $A_{ST}$ zu: $(0, 2, 16, 12, 4, 0)^T$.

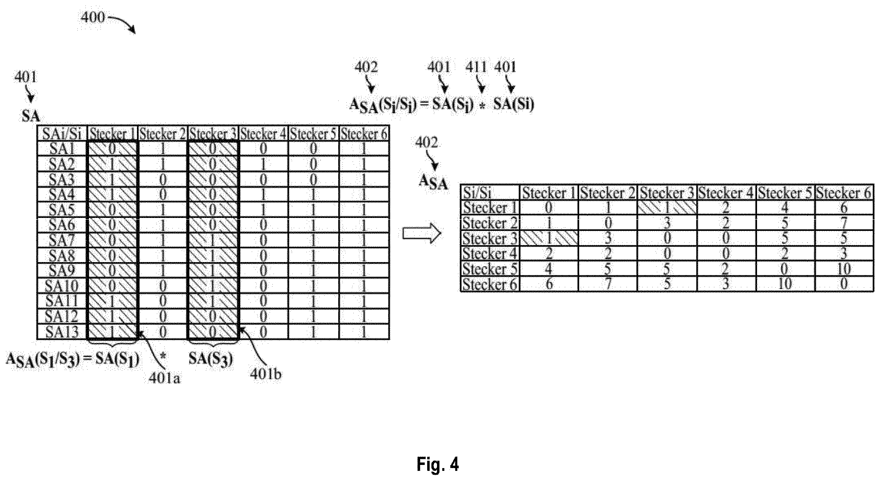

Fig. 4 zeigt eine schematische Darstellung einer beispielhaften Konfigurationsmatrix bzw. Sonderausstattungsmatrix SA 401 sowie der zugehörigen Konfigurations-Adjazenzmatrix $A_{SA}$ 402 entsprechend einem zweiten Adjazenzkriterium 400 gemäß einem Ausführungsbeispiel.

Neben den Verbindungsbeziehungen ist die Beziehung über die Zuordnung zu Konfigurationen bzw. Sonderausstattungen (SAs) von Bedeutung, welche über Konfigurations-Codes bzw. SA-Codes repräsentiert wird. Damit sich in der Modulbildung die SA-Zugehörigkeit wiederspiegelt, wird aus der SA-Liste 401 eine SA-Adjazenz Matrix 402 bzw. Konfigurations-Adjazenzmatrix 402 hergeleitet. Die SA-Liste 401 oder Konfigurationsliste 401 kann als eine Konfigurationsmatrix SA 401 dargestellt werden.

Die Sa-Matrix bzw. Konfigurationsmatrix SA 401 listet für jeden Stecker 201, 202, 203, 204, 205, 206 auf, für welche SAs bzw. Konfigurationen 401a, 401b Verbindungsbeziehungen benötigt werden. In diesem Beispiel enthält der Stecker 1 Leitungen für die SAs 2, 3, 4, 11, 12 und 13 entsprechend der Konfiguration 401a und der Stecker 3 enthält Leitungen für die SAs 7, 8, 9, 10, 11 entsprechend der Konfiguration 401b.

In diesem Beispiel sind alle SAs gleich gewichtet (mit 1). Grundsätzlich kann auch eine kleinere Gewichtung, also kleiner als 1, vorgenommen werden, beispielsweise entsprechend der Take Rate (TR). Die Take Rate stellt die Auftretenshäufigkeit der einzelnen Konfigurationen bzw. SAs dar. Wird eine bestimmte Konfiguration von vielen Kunden oft gewählt, so erhält diese Konfiguration eine hohe Take Rate entsprechend einer hohen Auftretenshäufigkeit. Wird eine bestimmte Konfiguration nur von wenigen Kunden gewählt, so erhält diese Konfiguration eine geringe Take Rate entsprechend einer geringen Auftretenshäufigkeit. Die Take Rate kann über eine Einstellung eines Gewichts von •TR bei den Konfigurationen bzw. SAs berücksichtigt werden.

Die SA-Adjazenz 402 oder Konfigurations-Adjazenzmatrix 402 kann aus dem Skalarprodukt 411 jeweils zweier Spalten S1/S2 der SA Matrix bzw. Konfigurationsmatrix 401 für alle Spalten S1 und S2 bestimmt werden, wie in Figur 4 dargestellt.

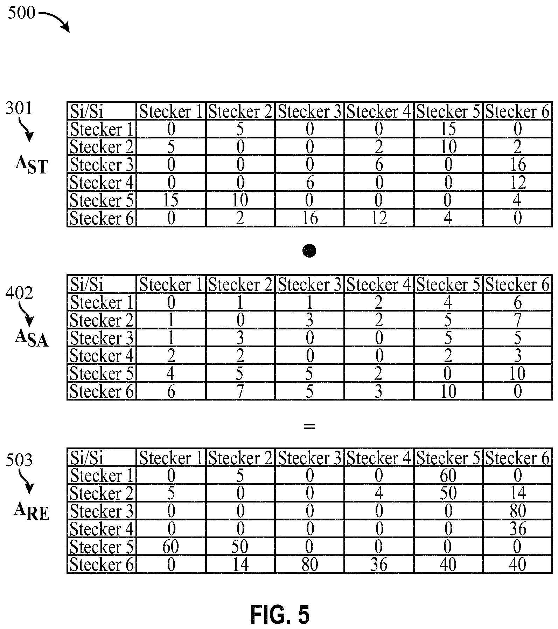

Fig. 5 zeigt eine schematische Darstellung 500 einer beispielhaften kombinierten bzw. resultierenden Adjazenzmatrix $A_{RE}$ 503, welche aus einer Kombination der Stecker-Adjazenzmatrix $A_{ST}$ 301 mit der Konfigurations-Adjazenzmatrix $A_{SA}$ 402 gebildet wird, gemäß einem Ausführungsbeispiel.

Für eine geeignete Modularisierung der Verbindungsanordnung 200 aus Figur 2 sollte sowohl die Stecker-Adjazenzmatrix $A_{ST}$ 301 als auch die Konfigurations-Adjazenzmatrix $A_{SA}$ 402 berücksichtigt werden.

Die resultierende Adjazenzmatrix $A_{RE}$, hier auch als kombinierte Adjazenzmatrix $A_{RE}$ 503 bezeichnet, ergibt sich aus dem Produkt der Adjazenzmatrizen für Stecker-Verbindungsbeziehungen $A_{ST}$ 301 mit der für SA-Beziehung $A_{SA}$ 402: $A_{RE} = A_{ST} \, A_{SA}$.

Diese Matrix 503 ist geeignet, für jeden Stecker Si einen Stecker Sj zu bestimmen, zu dem dieser Stecker die größte Affinität (d.h. den höchsten Adjazenzwert) besitzt.

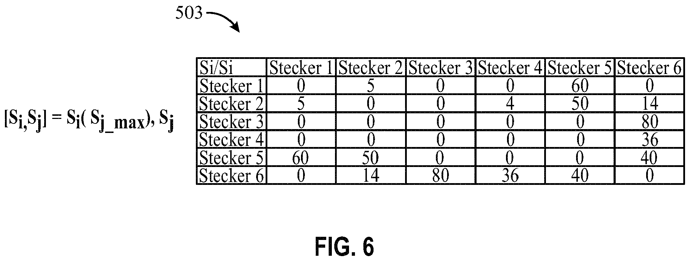

Fig. 6 zeigt eine schematische Darstellung der kombinierten Adjazenzmatrix $A_{RE}$ 503 mit Kenntlichmachung der maximalen kombinierten Adjazenzwerte gemäß einem Ausführungsbeispiel.

Diese kombinierte Adjazenzmatrix $A_{RE}$ 503 ist dazu geeignet, für jeden Stecker Si einen Stecker Sj zu bestimmen, zu dem dieser Stecker die größte Affinität (d.h. den höchsten Adjazenzwert) besitzt. So ist aus der kombinierten Adjazenzmatrix $A_{RE}$ 503 ersichtlich, dass der Stecker 5 zu Stecker 1 den höchsten Adjazenzwert, nämlich 60 aufweist, zu Stecker 2 hat Stecker 5 den höchsten Adjazenzwert, nämlich 50, zu Stecker 3 hat Stecker 6 den höchsten Adjazenzwert, nämlich 80, zu Stecker 4 hat Stecker 6 den höchsten Adjazenzwert, nämlich 36, zu Stecker 5 hat Stecker 1 den höchsten Adjazenzwert, nämlich 60, und zu Stecker 6 hat Stecker 3 den höchsten Adjazenzwert, nämlich 80.

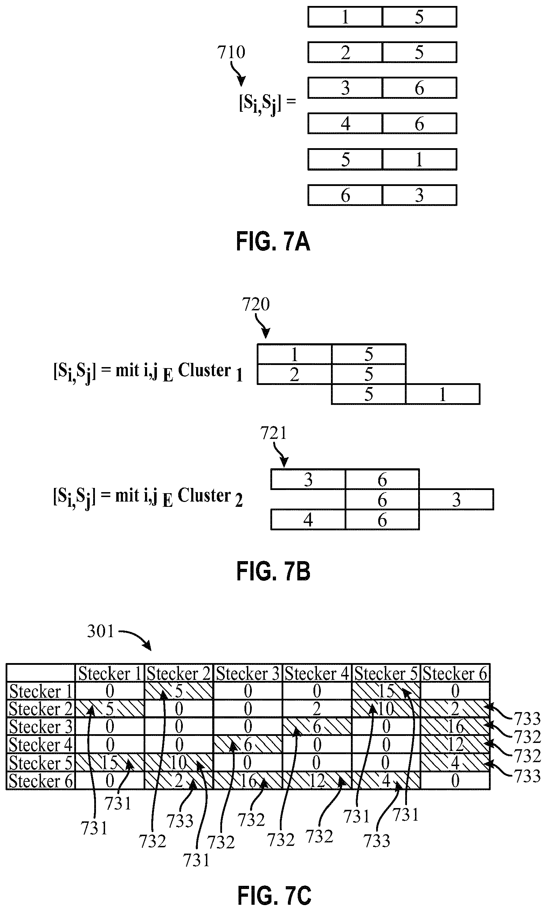

Die so entstehenden "Affinitätspärchen" lassen sich als Zweier-Tupel darstellen, wie in Figur 7a dargestellt.

Fig. 7a zeigt eine schematische Darstellung der Paare von Steckverbindern 710, deren kombinierte Adjazenz in der kombinierten Adjazenzmatrix $A_{RE}$ 503 maximal ist, gemäß einem Ausführungsbeispiel.

Diese Paare von Steckverbindern 710 entsprechen den in Figur 6 beschriebenen Affinitätspärchen. D.h. ein erstes Paar besteht aus Stecker 1 und Stecker 5, welche zueinander die höchste Adjazenz aufweisen. Ein zweites Paar besteht aus Stecker 2 und Stecker 5, welche zueinander die höchste Adjazenz aufweisen. Ein drittes Paar besteht aus Stecker 3 und Stecker 6, welche zueinander die höchste Adjazenz aufweisen. Ein viertes Paar besteht aus Stecker 4 und Stecker 6, welche zueinander die höchste Adjazenz aufweisen. Ein fünftes Paar besteht aus Stecker 5 und Stecker 1, welche zueinander die höchste Adjazenz aufweisen. Ein sechstes Paar besteht aus Stecker 6 und Stecker 3, welche zueinander die höchste Adjazenz aufweisen.

Die "Affinitätspärchen" sind wie Dominosteine, die von einem Sortieralgorithmus entsprechend passender "Punktezahl" zusammengelegt werden, wie in Figur 7b näher ausgeführt.

Fig. 7b zeigt eine schematische Darstellung Aufteilung der Paare von Steckverbindern 710 mit maximaler kombinierter Adjazenz in verschiedene Cluster 720, 721 gemäß einem Ausführungsbeispiel.

Das "Zusammenlegen der Dominosteine" bzw. der Zweier-Tupel erfolgt über einen einfachen Sortieralgorithmus, der übereinstimmende Elemente der Tupel erkennt und solche Tupel in einer Menge zusammenfasst. In Figur 7b ist zu sehen, das Stecker 5 in drei Tupeln vorkommt, in denen Stecker 6 nicht auftritt, während Stecker 6 in drei Tupeln vorkommt, in denen Stecker 5 nicht auftritt. Im vorliegenden Beispiel haben sich so zwei Cluster 720, 721 oder "Klumpen" ausgebildet. Der erste Cluster 720 umfasst die Tupel mit Stecker 5, während der zweite Cluster 721 die Tupel mit Stecker 6 umfasst. Diese Cluster sind Grundlage der Modulbildung.

Fig. 7c zeigt eine schematische Darstellung der Stecker-Adjazenzmatrix $A_{ST}$ 301 mit Kenntlichmachung der beiden Cluster 731, 732 sowie der verbleibenden Verbindungen 733 zwischen den beiden Clustern gemäß einem Ausführungsbeispiel.

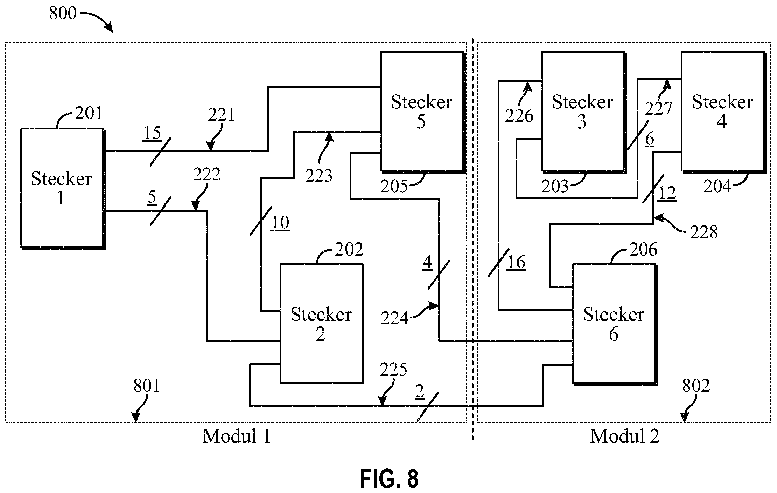

Die beiden Cluster sind mit ihren jeweiligen Bezugszeichen 731 und 732 in der Stecker-Adjazenzmatrix $A_{ST}$ 301 kenntlich gemacht. Es ist zu erkennen, dass es noch Verbindungen zwischen den beiden Clustern gibt. So hat Stecker 2 zwei Verbindungen 733 mit Stecker 6 und Stecker 5 hat vier Verbindungen 733 mit Stecker 6. Es können also noch keine abgeschlossenen Module dargestellt werden, wie in Figur 8 aufgezeigt, denn es existieren noch Verbindungen zwischen den beiden Modulen 801, 802.

Fig. 8 zeigt eine schematische Darstellung einer modularisierten elektrischen Verbindungsanordnung 800 gemäß einem Ausführungsbeispiel.

Die elektrische Verbindungsanordnung 800 dient zum Anschließen von frei konfigurierbaren elektrischen Komponenten in einem Fahrzeug, z.B. Komponenten 102, 103, 104, 105, 106, 107, 108, 109, 110, 111, 112, 113 wie in Figur 1 dargestellt.

Die elektrische Verbindungsanordnung 800 umfasst eine Mehrzahl von elektrischen Steckverbindern 201, 202, 203, 204, 205, 206, die über eine Mehrzahl von elektrischen Anschlussleitungen 221, 222, 223, 224, 225, 226, 227, 228 eines elektrischen Leitungssatzes gemäß einem ersten Adjazenzkriterium 300, $A_{ST}$ (siehe Figur 3) miteinander verbunden sind.

Der Mehrzahl von Steckverbindern 201, 202, 203, 204, 205, 206 ist jeweils ein Konfigurationscode 401a, 401b (siehe Figur 4) gemäß einem zweiten Adjazenzkriterium 400, $A_{SA}$ zugeordnet. Die Konfigurationscodes 401a, 401b der Steckverbinder 201, 202, 203, 204, 205, 206 geben eine spezifische Konfiguration der frei konfigurierbaren elektrischen Komponenten 102, 103, 104, 105, 106, 107, 108, 109, 110, 111, 112, 113 des Fahrzeugs an.

Die Mehrzahl von elektrischen Steckverbindern 201, 202, 203, 204, 205, 206 ist basierend auf einer Kombination des ersten Adjazenzkriteriums 300, $A_{ST}$ und des zweiten Adjazenzkriteriums 400, $A_{SA}$ in eine Mehrzahl von Fertigungsmodulen 801, 802 aufgeteilt.

Die Fertigungsmodule 801, 802 können jeweils Paare von Steckverbindern 710 umfassen, deren kombinierte Adjazenz 503, $A_{RE}$ (siehe Figur 5) bezüglich des ersten Adjazenzkriteriums 300, $A_{ST}$ und des zweiten Adjazenzkriteriums 400, $A_{SA}$ innerhalb gleicher Bereiche 720, 721 (siehe Figur 7a, b, c) liegt.

Das erste Adjazenzkriterium 300, $A_{ST}$ kann eine Stecker-Adjazenzmatrix 301, $A_{ST}$ umfassen, wie zu Figur 3 beschrieben, die eine Anzahl von Verbindungsbeziehungen der Steckverbinder 201, 202, 203, 204, 205, 206 untereinander angibt.

Das zweite Adjazenzkriterium 400, $A_{SA}$ kann auf einer Konfigurationmatrix 401, SA basieren, die für jeden Steckverbinder 201, 202, 203, 204, 205, 206 angibt, insbesondere mittels eines Bits, für welche Konfigurationen Anschlüsse für Verbindungsbeziehungen benötigt werden.

Die Konfigurationmatrix 401, SA kann eine Gewichtung der Konfigurationscodes 401a, 401b entsprechend einer Auftretenshäufigkeit der jeweiligen Konfigurationscodes 401a, 401b umfassen, wie zu Figur 4 beschrieben.

Das zweite Adjazenzkriterium 400, $A_{SA}$ (siehe Figur 4) kann auf einer Konfigurations-Adjazenzmatrix 402, $A_{SA}$ basieren, die sich für Kombinationen von Steckverbinder-Paaren Si, Sj aus dem Skalarprodukt 411 zweier entsprechender Spalten 401a, 401b der Konfigurationmatrix 401, SA bestimmt, wie näher zu Figur 4 beschrieben.

Die Kombination des ersten Adjazenzkriteriums 300, $A_{ST}$ und des zweiten Adjazenzkriteriums 400, $A_{SA}$ können auf einer kombinierten Adjazenzmatrix 503, $A_{RE}$ basieren, welche aus einer Multiplikation der Stecker-Adjazenzmatrix 301, $A_{ST}$ mit der Konfigurations-Adjazenzmatrix 402, $A_{SA}$ hervorgeht, wie beispielsweise näher zu Figur 5 beschrieben.

Die Paare von Steckverbindern 710, Si, Sj, aus denen sich die Fertigungsmodule 801, 802 zusammensetzen, können insbesondere diejenigen sein, deren kombinierte Adjazenz 503, $A_{RE}$ in der kombinierten Adjazenzmatrix 503, $A_{RE}$ maximal ist, wie beispielsweise näher zu Figur 5 beschrieben.

Die Aufteilung der Mehrzahl von elektrischen Steckverbindern 201, 202, 203, 204, 205, 206 in die Mehrzahl von Fertigungsmodulen 801, 802 kann basierend auf einer Sortierung der Paare von Steckverbindern 710, Si, Sj erfolgen, deren kombinierte Adjazenz 503, $A_{RE}$ in der kombinierten Adjazenzmatrix 503, $A_{RE}$ maximal ist, wie beispielsweise näher zu Figur 5 beschrieben.

Die Mehrzahl von Fertigungsmodulen 801, 802 weist dabei keine oder zumindest weniger elektrische Anschlussleitungen 224, 225 untereinander auf als die elektrischen Steckverbinder 201, 202, 203, 204, 205, 206 der jeweiligen Fertigungsmodule 801, 802 untereinander.

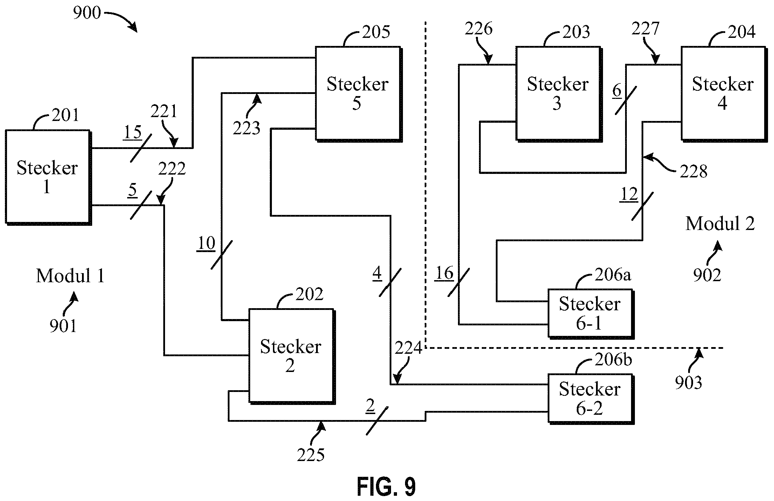

Fig. 9 zeigt eine schematische Darstellung einer modularisierten elektrischen Verbindungsanordnung 900 mit einer Aufteilung eines Steckers gemäß einem Ausführungsbeispiel.

Die Konfiguration der elektrischen Verbindungsanordnung 900 entspricht der Konfiguration der in Figur 8 dargestellten Verbindungsanordnung 800.

Aus der Verbindungsanordnung 800 geht hervor, dass noch Anschlussleitungen über die Module 801, 802 hinweg existieren. Diese müssten nachgesteckt werden. D.h., die Leitungen von Stecker 2 und Stecker 5 müssten in Stecker 6 im Zusammenbau nachgesteckt werden.

Eine hinreichende Maßnahme wird aus der Adjazenzmatrix sofort klar: Stecker 6 müsste aufgeteilt werden. Figur 9 zeigt die modularisierte elektrische Verbindungsanordnung 900, bei der Stecker 6 in einen ersten Teilstecker 6_1, 206a und einen zweiten Teilstecker 6_2, 206b aufgeteilt ist.

Mit der Aufteilung des Steckers 6 wird auch die Leitung 228 von Stecker 4 sowie die Leitung 226 von Stecker 3 in den ersten Teilstecker 6_1 geführt. Andererseits wird die Leitung 224 von Stecker 5 und die Leitung 225 von Stecker 2 in den zweiten Teilstecker 6_2 geführt.

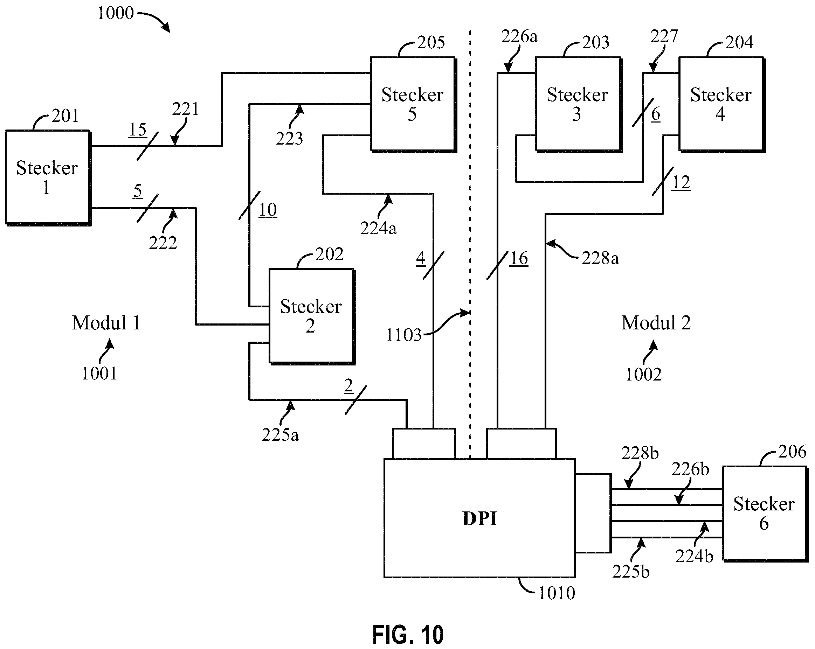

Eine Aufteilung von Steckern ist nicht immer möglich, insbesondere wenn wegen Legacy bestehende Funktions-Steuergeräte übernommen werden. Um trotzdem eine Abgeschlossenheit der Module zu erwirken, kann eine Entflechtung in einem DPI erfolgen, wie zu Figur 10 näher beschrieben.

Fig. 10 zeigt eine schematische Darstellung einer modularisierten elektrischen Verbindungsanordnung 1000 mit einer Aufteilung eines Steckers gemäß einem Ausführungsbeispiel.

Die Konfiguration der elektrischen Verbindungsanordnung 1000 entspricht der Konfiguration der in Figur 8 dargestellten Verbindungsanordnung 800.

Aus der Verbindungsanordnung 800 geht hervor, dass noch Anschlussleitungen über die Module 801, 802 hinweg existieren. Diese müssten nachgesteckt werden. D.h., die Leitungen von Stecker 2 und Stecker 5 müssten in Stecker 6 im Zusammenbau nachgesteckt werden.

Zur Vermeidung eines solchen Nachpinnens zeigt Figur 10 eine andere Lösung auf, welche auf der Nutzung eines Data Power Interface (DPI) beruht.

Das Data Power Interface ist ein Hardware-Baustein, der die Versorgungsspannung bereitstellt und eine Schnittstelle zur Entflechtung der Datenleitungen bzw. Datenverbindungen zwischen den Steckverbindern bereitstellt.

Das Data Power Interface, DPI, 1010 ist ausgebildet, die zumindest wenigeren elektrischen Anschlussleitungen 224, 225 der Fertigungsmodule 801, 802 untereinander zu entflechten, so dass die Fertigungsmodule 801, 802 in sich abgeschlossen sind und keine elektrischen Anschlussleitungen zu anderen Fertigungsmodulen 801, 802 aufweisen.

Figur 10 zeigt die modularisierte elektrische Verbindungsanordnung 1000, bei der die Verbindungsleitung 225 von Stecker 2 zu Stecker 6 in eine erste Teil-Verbindungsleitung 225a aufgeteilt ist, welche Stecker 2 mit dem DPI 1010 verbindet und eine zweite Teil-Verbindungsleitung 225b, welche das DPI 1010 mit Stecker 6 verbindet.

Die Verbindungsleitung 224 von Stecker 5 zu Stecker 6 ist in eine erste Teil-Verbindungsleitung 224a aufgeteilt ist, welche Stecker 5 mit dem DPI 1010 verbindet und eine zweite Teil-Verbindungsleitung 224b, welche das DPI 1010 mit Stecker 6 verbindet.

Die Verbindungsleitung 226 von Stecker 3 zu Stecker 6 ist in eine erste Teil-Verbindungsleitung 226a aufgeteilt ist, welche Stecker 3 mit dem DPI 1010 verbindet und eine zweite Teil-Verbindungsleitung 226b, welche das DPI 1010 mit Stecker 6 verbindet.

Die Verbindungsleitung 228 von Stecker 4 zu Stecker 6 ist in eine erste Teil-Verbindungsleitung 228a aufgeteilt ist, welche Stecker 4 mit dem DPI 1010 verbindet und eine zweite Teil-Verbindungsleitung 228b, welche das DPI 1010 mit Stecker 6 verbindet.

Die Mehrzahl von elektrischen Steckverbindern 201, 202, 203, 204, 205, 206 kann beispielsweise eine CAN-Topologie bilden. Das DPI 1010 kann also neben seiner Funktion als Stromverteiler als Sternpunkt der CAN-Topologie ausgebildet sein.

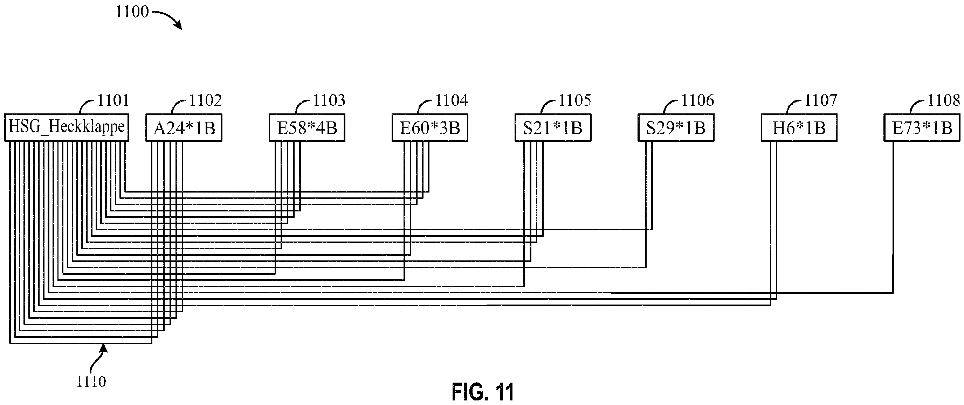

Fig. 11 zeigt eine schematische Darstellung einer modularisierten elektrischen Verbindungsanordnung 1100 gemäß einem Ausführungsbeispiel.

Insbesondere zeigt Figur 11 die Visualisierung eines abgeschlossenen Moduls, das der Algorithmus identifiziert hat am Beispiel einer Heckklappe 1101, die mit den elektrischen Komponenten 1102, 1103, 1104, 1105, 1106, 1107 und 1108 über den Leitungssatz 1110 verbunden ist.

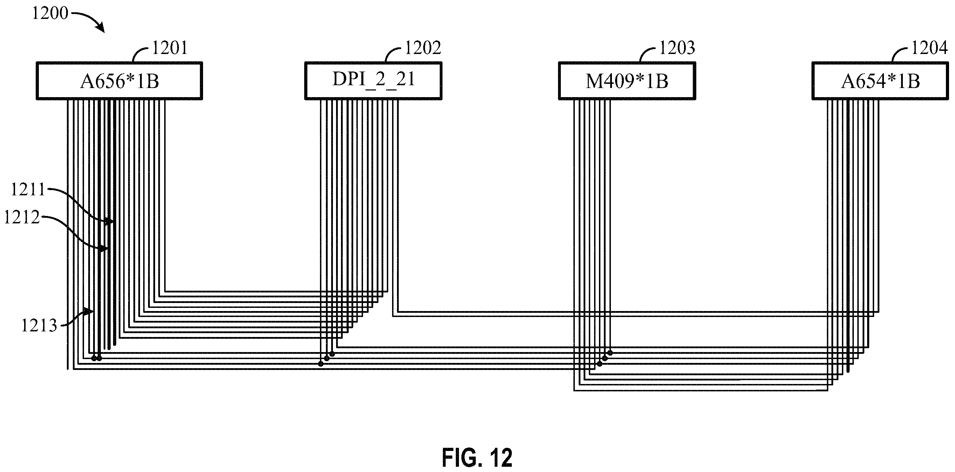

Fig. 12 zeigt eine schematische Darstellung einer modularisierten elektrischen Verbindungsanordnung 1200 gemäß einem Ausführungsbeispiel.

Insbesondere zeigt Figur 12 die Visualisierung eines weiteren Moduls am Beispiel einer Ladedose-Elektronik. Hier stellt das DPI mit seinem Stecker_2_21, 1202 bereits eine Entflechtung für alle (langen) Leitungen zur Verfügung, die zu den Steuergeräten in den Vorderwagen gehen. Allerdings sind noch die drei Leitungen 1211, 1212, 1213 aus einem anderen Modul nachzupinnen, die Abgeschlossenheit ist also noch nicht erreicht. Sie kann dann erreicht werden, wenn diese drei Verbindungen 1211, 1212, 1213 auch über das DPI 1202 geführt werden.

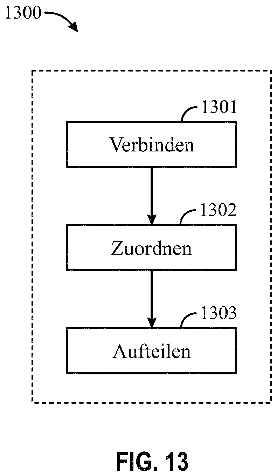

Fig. 13 zeigt eine schematische Darstellung eines Verfahrens 1300 zum Erzeugen einer modularen elektrischen Verbindungsanordnung gemäß einem Ausführungsbeispiel.

Das Verfahren 1300 dient zum Erzeugen einer modularen elektrischen Verbindungsanordnung zum Anschließen von frei konfigurierbaren elektrischen Komponenten 102, 103, 104, 105, 106, 107, 108, 109, 110, 111, 112, 113 in einem Fahrzeug, wie zum Beispiel einer modularen elektrischen Verbindungsanordnung 800, 900, 1000, 1100, 1200, wie in den Figuren 8 bis 12 dargestellt.

Das Verfahren 1300 umfasst die folgenden Schritte:

Verbinden 1301 einer Mehrzahl von elektrischen Steckverbindern 201, 202, 203, 204, 205, 206 (siehe Figur 2) über eine Mehrzahl von elektrischen Anschlussleitungen 221, 222, 223, 224, 225, 226, 227, 228 (siehe Figur 2) eines elektrischen Leitungssatzes zu einer elektrischen Verbindungsanordnung 800, 900, 1000, 1100, 1200 (siehe Figuren 8 bis 12) gemäß einem ersten Adjazenzkriterium 300, $A_{ST}$, wie zum Beispiel zu Figur 8 näher beschrieben;

Zuordnen 1302 eines Konfigurationscodes 401a, 401b gemäß einem zweiten Adjazenzkriterium 400, $A_{SA}$ (siehe Figur 4) zu der Mehrzahl von Steckverbindern 201, 202, 203, 204, 205, 206, wobei die Konfigurationscodes 401a, 401b der Steckverbinder 201, 202, 203, 204, 205, 206 eine spezifische Konfiguration der frei konfigurierbaren elektrischen Komponenten 102, 103, 104, 105, 106, 107, 108, 109, 110, 111, 112, 113 des Fahrzeugs angeben, wie zum Beispiel zu Figur 8 näher beschrieben; und

Aufteilen 1303 der Mehrzahl von elektrischen Steckverbindern 201, 202, 203, 204, 205, 206 basierend auf einer Kombination des ersten Adjazenzkriteriums 300, $A_{ST}$ und des zweiten Adjazenzkriteriums 400, $A_{SA}$ in eine Mehrzahl von Fertigungsmodulen 801, 802, wie zum Beispiel zu Figur 8 näher beschrieben.

Das Aufteilen 1303 kann folgendes umfassen: Bestimmen von jeweiligen Paaren von Steckverbindern 710, Si, Sj (siehe Figur 7), deren kombinierte Adjazenz 503, $A_{RE}$ (siehe Figur 5) bezüglich des ersten Adjazenzkriteriums 300, $A_{ST}$ und des zweiten Adjazenzkriteriums 400, $A_{SA}$ innerhalb gleicher Bereiche 720, 721 liegt.

Das Aufteilen 1303 kann folgendes umfassen: Bestimmen der jeweiligen Paare von Steckverbindern 710, Si, Sj basierend auf einer Multiplikation einer Stecker-Adjazenzmatrix 301, $A_{ST}$ mit einer Konfigurations-Adjazenzmatrix 402, $A_{SA}$, wobei die Stecker-Adjazenzmatrix 301, $A_{ST}$ eine Anzahl von Verbindungsbeziehungen der Steckverbinder 201, 202, 203, 204, 205, 206 untereinander angibt, wobei die Konfigurations-Adjazenzmatrix 402, $A_{SA}$ sich für Kombinationen von Steckverbinder-Paaren 710, Si, Sj aus dem Skalarprodukt 411 zweier entsprechender Spalten 401a, 401b einer Konfigurationmatrix 401, SA (siehe Figur 4) bestimmt, welche für jeden Steckverbinder 201, 202, 203, 204, 205, 206 angibt für welche Konfigurationen Anschlüsse für Verbindungsbeziehungen benötigt werden.

Das Verfahren 1300 kann als Algorithmus implementiert werden, welcher die oben zu den Figuren 2 bis 8 beschriebenen Schritte ausführt. Zusammengefasst werden die folgenden Rechenoperationen ausgeführt:

1) Bestimmen der Adjazenzmatrix $A_{ST}$ der Steckverbindungen;

2) Berechnen der SA (Sonderausstattungs-) Adjazenzmatrix:

$$A_{SA}(Si/Sj) = SA(Si) * SA(Sj);$$

3) Berechnung der resultierenden Adjazenzmatrix:

$$A_{RE} = A_{ST} \bullet A_{SA};$$

4) Berechnung der Zweier-Tupel mit der höchsten resultierenden Adjazenz:

$$[Si, Sj] = A_{RE} (Si(Sj\_max), Sj);$$

5) Sortierung nach dem Kriterium, dass gleiche Tupelelemente vorhanden: Sort:

$$Si\_n = Sj\_m \ \cup \ Si\_m = Sj\_n.$$

Dabei bezeichnen:

\* das Skalarprodukt,
• das elementweise Produkt; und
∪ die Vereinigungsmenge.

Bezugszeichenliste

| | |
|---|---|
| 100 | Anordnung 100 aus frei konfigurierbaren elektrischen Komponenten in einem Fahrzeug |
| 101 | Gateway |
| 102 | Anzeigeinstrumente |
| 103 | Abstandsregelung |
| 104 | ABS/ESP |
| 105 | Motorelektronik |
| 106 | Dachelektronik |
| 107 | Schiebedach |
| 108 | Heizung |
| 109 | Klimaanlage |
| 110 | Kartenleser |
| 111 | Navigation |
| 112 | Verstärker |
| 113 | TV-Tuner |
| 200 | elektrische Verbindungsanordnung |
| 201 | Stecker 1 |
| 202 | Stecker 2 |
| 203 | Stecker 3 |
| 204 | Stecker 4 |
| 205 | Stecker 5 |
| 206 | Stecker 6 |
| 221 | elektrische Anschlussleitung Stecker 1 zu Stecker 5 |
| 222 | elektrische Anschlussleitung Stecker 1 zu Stecker 2 |
| 223 | elektrische Anschlussleitung Stecker 2 zu Stecker 5 |
| 224 | elektrische Anschlussleitung Stecker 6 zu Stecker 5 |
| 225 | elektrische Anschlussleitung Stecker 2 zu Stecker 6 |
| 226 | elektrische Anschlussleitung Stecker 3 zu Stecker 6 |
| 227 | elektrische Anschlussleitung Stecker 3 zu Stecker 4 |
| 228 | elektrische Anschlussleitung Stecker 4 zu Stecker 6 |
| 300 | erstes Adjazenzkriterium |
| 301 | Stecker-Adjazenzmatrix |
| 400 | zweites Adjazenzkriterium |
| 401 | Konfigurationsmatrix bzw. Sonderausbau (SA) Matrix |
| 401a | Konfigurationscode von Stecker 1 |
| 401b | Konfigurationscode von Stecker 3 |
| 402 | Konfigurations-Adjazenzmatrix |
| 411 | Skalarprodukt |
| 500 | Darstellung des Entstehens der kombinierten Adjazenzmatrix |
| 503 | kombinierte Adjazenzmatrix |
| 710 | Paare von Steckverbindern |
| 720 | erster Cluster bzw. erster Adjazenzbereich |
| 721 | zweiter Cluster bzw. zweiter Adjazenzbereich |
| 731 | Verbindungen in erstem Cluster |
| 732 | Verbindungen in zweitem Cluster |
| 733 | Verbindungen über Modulgrenzen hinweg |
| 800 | modularisierte elektrische Verbindungsanordnung |
| 900 | modularisierte elektrische Verbindungsanordnung |
| 206a | aufgeteilter Stecker 6, Teil 1 |
| 206b | aufgeteilter Stecker 6, Teil 2 |
| 1000 | modularisierte elektrische Verbindungsanordnung |
| 1010 | Data Power Interface, DPI |
| 224a | aufgeteilte elektrische Anschlussleitung Stecker 5 zu DPI |
| 224b | aufgeteilte elektrische Anschlussleitung Stecker 6 zu DPI |
| 225a | aufgeteilte elektrische Anschlussleitung Stecker 2 zu DPI |
| 225b | aufgeteilte elektrische Anschlussleitung Stecker 6 zu DPI |
| 226a | aufgeteilte elektrische Anschlussleitung Stecker 3 zu DPI |
| 226b | aufgeteilte elektrische Anschlussleitung Stecker 6 zu DPI |
| 228a | aufgeteilte elektrische Anschlussleitung Stecker 4 zu DPI |
| 228b | aufgeteilte elektrische Anschlussleitung Stecker 6 zu DPI |
| 1100 | modularisierte elektrische Verbindungsanordnung |
| 1101 | Steckverbinder 1 |
| 1102 | Steckverbinder 2 |
| 1103 | Steckverbinder 3 |
| 1104 | Steckverbinder 4 |
| 1105 | Steckverbinder 5 |
| 1106 | Steckverbinder 6 |
| 1107 | Steckverbinder 7 |
| 1108 | Steckverbinder 8 |
| 1200 | modularisierte elektrische Verbindungsanordnung |
| 1201 | Steckverbinder 1 |
| 1202 | Steckverbinder 2 |
| 1203 | Steckverbinder 3 |
| 1204 | Steckverbinder 4 |
| 1300 | Verfahren zum Erzeugen einer modularen elektrischen Verbindungsanordnung |
| 1301 | Verfahrensschritt 1: Verbinden |
| 1301 | Verfahrensschritt 2: Zuordnen |
| 1301 | Verfahrensschritt 3: Aufteilen |

**Patentansprüche**

1. Elektrische Verbindungsanordnung (800) zum Anschließen von frei konfigurierbaren elektrischen Komponenten (102, 103, 104, 105, 106, 107, 108, 109, 110, 111, 112, 113) in einem Fahrzeug,

   wobei die elektrische Verbindungsanordnung (800) eine Mehrzahl von elektrischen Steckverbindern (201, 202, 203, 204, 205, 206) umfasst, die über eine Mehrzahl von elektrischen Anschlussleitungen (221, 222, 223, 224, 225, 226, 227, 228) eines elektrischen Leitungssatzes gemäß einem ersten Adjazenzkriterium (300, $A_{ST}$) miteinander verbunden sind, wobei der Mehrzahl von Steckverbindern (201, 202, 203, 204, 205, 206) jeweils ein Konfigurationscode (401a, 401b) gemäß einem zweiten Adjazenzkriterium (400, $A_{SA}$) zugeordnet ist, wobei die Konfigurationscodes (401a, 401b) der Steckverbinder (201, 202, 203, 204, 205, 206) eine spezifische Konfiguration der frei konfigurierbaren elektrischen Komponenten (102, 103, 104, 105, 106, 107, 108, 109, 110, 111, 112, 113) des Fahrzeugs angeben, wobei die Mehrzahl von elektrischen Steckverbindern (201, 202, 203, 204, 205, 206) basierend auf einer Kombination des ersten Adjazenzkriteriums (300, $A_{ST}$) und des zweiten Adjazenzkriteriums (400, $A_{SA}$) in eine Mehrzahl von Fertigungsmodulen (801, 802) aufgeteilt ist.

2. Elektrische Verbindungsanordnung (800) nach Anspruch 1, wobei die Fertigungsmodule (801, 802) jeweils Paare von Steckverbindern (710) umfassen, deren kombinierte Adjazenz (503, $A_{RE}$) bezüglich des ersten Adjazenzkriteriums (300, $A_{ST}$) und des zweiten Adjazenzkriteriums (400, $A_{SA}$) innerhalb gleicher Bereiche (720, 721) liegt.

3. Elektrische Verbindungsanordnung (800) nach Anspruch 1 oder 2, wobei das erste Adjazenzkriterium (300, $A_{ST}$) eine Stecker-Adjazenzmatrix (301, $A_{ST}$) umfasst, die eine Anzahl von Verbindungsbeziehungen der Steckverbinder (201, 202, 203, 204, 205, 206) untereinander angibt.

4. Elektrische Verbindungsanordnung (800) nach Anspruch 3, wobei das zweite Adjazenzkriterium (400, $A_{SA}$) auf einer Konfigurationmatrix (401, SA) basiert, die für jeden Steckverbinder (201, 202, 203, 204, 205, 206) angibt, insbesondere mittels eines Bits, für welche Konfigurationen Anschlüsse für Verbindungsbeziehungen benötigt werden.

5. Elektrische Verbindungsanordnung (800) nach Anspruch 4, wobei die Konfigurationmatrix (401, SA) eine Gewichtung der Konfigurationscodes (401a, 401b) entsprechend einer Auftretenshäufigkeit der jeweiligen Konfigurationscodes (401a, 401b) umfasst.

6. Elektrische Verbindungsanordnung (800) nach einem der vorherigen Ansprüche, wobei die Aufteilung der Mehrzahl von elektrischen Steckverbindern (201, 202, 203, 204, 205, 206) in die Mehrzahl von Fertigungsmodulen (801, 802) basierend auf einer Sortierung der Paare von Steckverbindern (710, Si, Sj) erfolgt, deren kombinierte Adjazenz (503, $A_{RE}$) in der kombinierten Adjazenzmatrix (503, $A_{RE}$) maximal ist.

7. elektrische Verbindungsanordnung (800) nach einem der vorstehenden Ansprüche, wobei die Mehrzahl von Fertigungsmodulen (801, 802) keine oder zumindest weniger elektrische Anschlussleitungen (224, 225) untereinander aufweisen als die elektrischen Steckverbinder (201, 202, 203, 204, 205, 206) der jeweiligen Fertigungsmodule (801, 802) untereinander.

8. Verfahren (1300) zum Erzeugen einer modularen elektrischen Verbindungsanordnung (800) zum Anschließen von frei konfigurierbaren elektrischen Komponenten (102, 103, 104, 105, 106, 107, 108, 109, 110, 111, 112, 113) in einem Fahrzeug, wobei das Verfahren (1300) folgende Schritte umfasst:

   Verbinden (1301) einer Mehrzahl von elektrischen Steckverbindern (201, 202, 203, 204, 205, 206) über eine Mehrzahl von elektrischen Anschlussleitungen (221, 222, 223, 224, 225, 226, 227, 228) eines elektrischen Leitungssatzes zu einer elektrischen Verbindungsanordnung (800) gemäß einem ersten Adjazenzkriterium (300, $A_{ST}$); Zuordnen (1302) eines Konfigurationscodes (401a, 401b) gemäß einem zweiten Adjazenzkriterium (400, $A_{SA}$) zu der Mehrzahl von Steckverbindern (201, 202, 203, 204, 205, 206), wobei die Konfigurationscodes (401a, 401b) der Steckverbinder (201, 202, 203, 204, 205, 206) eine spezifische Konfiguration der frei konfigurierbaren elektrischen Komponenten (102, 103, 104, 105, 106, 107, 108, 109, 110, 111, 112, 113) des Fahrzeugs angeben, Aufteilen (1303) der Mehrzahl von elektrischen Steckverbindern (201, 202, 203, 204, 205, 206) basierend auf einer Kombination des ersten Adjazenzkriteriums (300, $A_{ST}$) und des zweiten Adjazenzkriteriums (400, $A_{SA}$) in eine Mehrzahl von Fertigungsmodulen (801, 802).

**9.** Verfahren (1300) nach Anspruch 8, wobei das Aufteilen (1303) folgendes umfasst:
Bestimmen von jeweiligen Paaren von Steckverbindern (710, Si, Sj), deren kombinierte Adjazenz (503, $A_{RE}$) bezüglich des ersten Adjazenzkriteriums (300, $A_{ST}$) und des zweiten Adjazenzkriteriums (400, $A_{SA}$) innerhalb gleicher Bereiche (720, 721) liegt.

**10.** Verfahren (1300) nach Anspruch 9, wobei das Aufteilen (1303) folgendes umfasst:

Bestimmen der jeweiligen Paare von Steckverbindern (710, Si, Sj) basierend auf einer Multiplikation einer Stecker-Adjazenzmatrix (301, $A_{ST}$) mit einer Konfigurations-Adjazenzmatrix (402, $A_{SA}$),
wobei die Stecker-Adjazenzmatrix (301, $A_{ST}$) eine Anzahl von Verbindungsbeziehungen der Steckverbinder (201, 202, 203, 204, 205, 206) untereinander angibt,
wobei die Konfigurations-Adjazenzmatrix (402, $A_{SA}$) sich für Kombinationen von Steckverbinder-Paaren (710, Si, Sj) aus dem Skalarprodukt (411) zweier entsprechender Spalten (401a, 401b) einer Konfigurationmatrix (401, SA) bestimmt, welche für jeden Steckverbinder (201, 202, 203, 204, 205, 206) angibt für welche Konfigurationen Anschlüsse für Verbindungsbeziehungen benötigt werden.

FIG. 1

FIG. 2

300 ↘

301 ↓

| $A_{ST}$ | Si/Si | Stecker 1 | Stecker 2 | Stecker 3 | Stecker 4 | Stecker 5 | Stecker 6 |
|---|---|---|---|---|---|---|---|
| | Stecker 1 | 0 | 5 | 0 | 0 | 15 | 0 |
| | Stecker 2 | 5 | 0 | 0 | 2 | 10 | 2 |
| | Stecker 3 | 0 | 0 | 0 | 6 | 0 | 16 |
| | Stecker 4 | 0 | 0 | 6 | 0 | 0 | 12 |
| | Stecker 5 | 15 | 10 | 0 | 0 | 0 | 4 |
| | Stecker 6 | 0 | 2 | 16 | 12 | 4 | 0 |

**FIG. 3**

EP 3 960 545 A1

400

401

**SA**

$$A_{SA}(S_i/S_j) = SA(S_j) * SA(S_i)$$

402   401   411   401

402

**ASA**

| SAi/Si | Stecker 1 | Stecker 2 | Stecker 3 | Stecker 4 | Stecker 5 | Stecker 6 |
|---|---|---|---|---|---|---|
| SA1 | 0 | 1 | 0 | 0 | 0 | 1 |
| SA2 | 1 | 1 | 0 | 1 | 0 | 1 |
| SA3 | 1 | 0 | 0 | 0 | 0 | 1 |
| SA4 | 1 | 0 | 0 | 1 | 1 | 1 |
| SA5 | 0 | 1 | 0 | 1 | 1 | |
| SA6 | 0 | 1 | 0 | 0 | 1 | |
| SA7 | 0 | 1 | 1 | 0 | 1 | |
| SA8 | 0 | 1 | 1 | 0 | 1 | |
| SA9 | 0 | 1 | 1 | 0 | 1 | |
| SA10 | 0 | 0 | 1 | 0 | 1 | 1 |
| SA11 | 1 | 0 | 1 | 0 | 1 | |
| SA12 | 1 | 0 | 0 | 0 | 1 | |
| SA13 | 1 | 0 | 0 | 0 | 1 | 1 |

| Si/Si | Stecker 1 | Stecker 2 | Stecker 3 | Stecker 4 | Stecker 5 | Stecker 6 |
|---|---|---|---|---|---|---|
| Stecker 1 | 0 | 1 | 1 | 2 | 4 | 6 |
| Stecker 2 | 1 | 0 | 3 | 2 | 5 | 7 |
| Stecker 3 | 1 | 3 | 0 | 0 | 5 | 5 |
| Stecker 4 | 2 | 2 | 0 | 0 | 2 | 3 |
| Stecker 5 | 4 | 5 | 5 | 2 | 0 | 10 |
| Stecker 6 | 6 | 7 | 5 | 3 | 10 | 0 |

$$A_{SA}(S_1/S_3) = SA(S_1) * SA(S_3)$$

401a   401b

**Fig. 4**

17

500

301

$A_{ST}$

| Si/Si | Stecker 1 | Stecker 2 | Stecker 3 | Stecker 4 | Stecker 5 | Stecker 6 |
|---|---|---|---|---|---|---|
| Stecker 1 | 0 | 5 | 0 | 0 | 15 | 0 |
| Stecker 2 | 5 | 0 | 0 | 2 | 10 | 2 |
| Stecker 3 | 0 | 0 | 0 | 6 | 0 | 16 |
| Stecker 4 | 0 | 0 | 6 | 0 | 0 | 12 |
| Stecker 5 | 15 | 10 | 0 | 0 | 0 | 4 |
| Stecker 6 | 0 | 2 | 16 | 12 | 4 | 0 |

●

402

$A_{SA}$

| Si/Si | Stecker 1 | Stecker 2 | Stecker 3 | Stecker 4 | Stecker 5 | Stecker 6 |
|---|---|---|---|---|---|---|
| Stecker 1 | 0 | 1 | 1 | 2 | 4 | 6 |
| Stecker 2 | 1 | 0 | 3 | 2 | 5 | 7 |
| Stecker 3 | 1 | 3 | 0 | 0 | 5 | 5 |
| Stecker 4 | 2 | 2 | 0 | 0 | 2 | 3 |
| Stecker 5 | 4 | 5 | 5 | 2 | 0 | 10 |
| Stecker 6 | 6 | 7 | 5 | 3 | 10 | 0 |

=

503

$A_{RE}$

| Si/Si | Stecker 1 | Stecker 2 | Stecker 3 | Stecker 4 | Stecker 5 | Stecker 6 |
|---|---|---|---|---|---|---|
| Stecker 1 | 0 | 5 | 0 | 0 | 60 | 0 |
| Stecker 2 | 5 | 0 | 0 | 4 | 50 | 14 |
| Stecker 3 | 0 | 0 | 0 | 0 | 0 | 80 |
| Stecker 4 | 0 | 0 | 0 | 0 | 0 | 36 |
| Stecker 5 | 60 | 50 | 0 | 0 | 0 | 0 |
| Stecker 6 | 0 | 14 | 80 | 36 | 40 | 40 |

FIG. 5

503

$$[S_i, S_j] = S_i(S_{j\_max}), S_j$$

| Si/Si | Stecker 1 | Stecker 2 | Stecker 3 | Stecker 4 | Stecker 5 | Stecker 6 |
|---|---|---|---|---|---|---|
| Stecker 1 | 0 | 5 | 0 | 0 | 60 | 0 |
| Stecker 2 | 5 | 0 | 0 | 4 | 50 | 14 |
| Stecker 3 | 0 | 0 | 0 | 0 | 0 | 80 |
| Stecker 4 | 0 | 0 | 0 | 0 | 0 | 36 |
| Stecker 5 | 60 | 50 | 0 | 0 | 0 | 40 |
| Stecker 6 | 0 | 14 | 80 | 36 | 40 | 0 |

**FIG. 6**

710

$[S_i, S_j] =$

| 1 | 5 |
|---|---|
| 2 | 5 |
| 3 | 6 |
| 4 | 6 |
| 5 | 1 |
| 6 | 3 |

**FIG. 7A**

720

$[S_i, S_j] = \text{mit } i, j \in \text{Cluster }_1$

| 1 | 5 | |
|---|---|---|
| 2 | 5 | |
| | 5 | 1 |

721

$[S_i, S_j] = \text{mit } i, j \in \text{Cluster }_2$

| 3 | 6 | |
|---|---|---|
| | 6 | 3 |
| 4 | 6 | |

**FIG. 7B**

301

| | Stecker 1 | Stecker 2 | Stecker 3 | Stecker 4 | Stecker 5 | Stecker 6 |
|---|---|---|---|---|---|---|
| Stecker 1 | 0 | 5 | 0 | 0 | 15 | 0 |
| Stecker 2 | 5 | 0 | 0 | 2 | 10 | 2 |
| Stecker 3 | 0 | 0 | 0 | 6 | 0 | 16 |
| Stecker 4 | 0 | 0 | 6 | 0 | 0 | 12 |
| Stecker 5 | 15 | 10 | 0 | 0 | 0 | 4 |
| Stecker 6 | 0 | 2 | 16 | 12 | 4 | 0 |

733
732
732
733

731
731
733
732
732
732 732
731
731
733
731

**FIG. 7C**

FIG. 8

FIG. 9

FIG. 10

FIG. 11

FIG. 12

1300

1301
Verbinden

1302
Zuordnen

1303
Aufteilen

**FIG. 13**

Europäisches
Patentamt
European
Patent Office
Office européen
des brevets

## EUROPÄISCHER RECHERCHENBERICHT

Nummer der Anmeldung

EP 21 19 1622

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2020/114726 A1 (DRAEXLMAIER LISA GMBH [DE]) 11. Juni 2020 (2020-06-11) * Zusammenfassung; Abbildungen 2,4,7,8,11,12 * * Seite 3, Zeile 32 – Seite 4, Zeile 8 * * Seite 16, Zeilen 11-16 * * Seite 17, Zeilen 2-21; 30-31 * ----- | 1-3,7-9 | INV. B60R16/02 |
| X | DE 198 52 560 A1 (FRAUNHOFER GES FORSCHUNG [DE]) 1. Juli 1999 (1999-07-01) * Zusammenfassung; Abbildungen 1-7 * * Seite 2, Zeilen 5-6;31-36 * * Seite 3, Zeilen 36-44 * * Seite 4, Zeilen 2-12 * ----- | 1,3,8 | |
| X | DE 600 19 939 T2 (LEAR CORP [US]) 9. März 2006 (2006-03-09) * Absätze [0012] – [0014], [0022]; Abbildungen 1-5 * ----- | 1,8 | |
| A | EP 3 536 560 A1 (YAZAKI CORP [JP]) 11. September 2019 (2019-09-11) * Zusammenfassung; Abbildungen 1-3 * ----- | 1-10 | RECHERCHIERTE SACHGEBIETE (IPC) B60R |

Der vorliegende Recherchenbericht wurde für alle Patentansprüche erstellt

| Recherchenort | Abschlußdatum der Recherche | Prüfer |
|---|---|---|
| Berlin | 11. Januar 2022 | Sleightholme, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 21 19 1622

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-2022

| Im Recherchenbericht angeführtes Patentdokument | Datum der Veröffentlichung | Mitglied(er) der Patentfamilie | Datum der Veröffentlichung |
|---|---|---|---|
| WO 2020114726 A1 | 11-06-2020 | CN 113260537 A | 13-08-2021 |
| | | DE 102018131199 A1 | 10-06-2020 |
| | | EP 3891021 A1 | 13-10-2021 |
| | | WO 2020114726 A1 | 11-06-2020 |
| DE 19852560 A1 | 01-07-1999 | KEINE | |
| DE 60019939 T2 | 09-03-2006 | DE 60019939 T2 | 09-03-2006 |
| | | EP 1210241 A1 | 05-06-2002 |
| | | US 6441510 B1 | 27-08-2002 |
| | | WO 0112459 A1 | 22-02-2001 |
| EP 3536560 A1 | 11-09-2019 | CN 110247350 A | 17-09-2019 |
| | | EP 3536560 A1 | 11-09-2019 |
| | | JP 2019160422 A | 19-09-2019 |
| | | US 2019275966 A1 | 12-09-2019 |

EPO FORM P0461

Für nähere Einzelheiten zu diesem Anhang : siehe Amtsblatt des Europäischen Patentamts, Nr.12/82